Europäisches Patentamt

European Patent Office

Office européen des brevets

(11) Veröffentlichungsnummer: **0 310 889**
**A2**

(12) **EUROPÄISCHE PATENTANMELDUNG**

(21) Anmeldenummer: **88115685.5**

(22) Anmeldetag: **23.09.88**

(51) Int. Cl.4: **H04M 1/22 , G08B 5/36**

(30) Priorität: **09.10.87 CH 3959/87**

(43) Veröffentlichungstag der Anmeldung:
**12.04.89 Patentblatt 89/15**

(84) Benannte Vertragsstaaten:
**CH DE FR IT LI SE**

(71) Anmelder: **Peiker, Andreas**
**Terracinaweg 5 Postfach 20 55**
**D-6380 Bad Homburg v.d. Höhe(DE)**

(72) Erfinder: **Peiker, Andreas**
**Terracinaweg 5 Postfach 20 55**
**D-6380 Bad Homburg v.d. Höhe(DE)**

(74) Vertreter: **Keller, René, Dr. et al**
**Postfach 12**
**CH-3000 Bern 7(CH)**

(54) **Anzeigeanordnung mit mehreren Lichtquellen.**

(57) Die Anzeigeanordnung (1) in der Oeffnung (3) des Oberteils eines Telefonhörers (2) hat mehrere Leuchtfelder (12), die über lichtleitende Teile eines Lichtleitelements (5) beleuchtet werden. Ein Flächenanzeigeelement (7) erhält seine Hintergrundbeleuchtung durch Lichtleitung in einem lichtstreuenden plattenförmigen Teil (13) des Lichtleitelements (5). Die Lichtquellen sitzen mit einer Ansteuerschaltung auf einer Leiterplatte unterhalb des Lichtleitelements (5). Die elektrische Verbindung (17) zwischen der Ansteuerschaltung und dem Flächenanzeigeelement (7), die Leiterplatte mit der Ansteuerschaltung und das Lichtleitelement (5) sind durch Rasten (20) in der Abdeckplatte (4) zusammengehalten. Die Abdeckplatte (4) ist staub- und wasserdicht im Oberteil des Telefonhörers (2) befestigt.

Das Lichtleitelement ist in einer Variante so ausgebildet, dass es einen plattenförmigen Innenteil zur Hintergrundbeleuchtung für das Flächenanzeigeelement (7) und eine Schnapphalterung für das Flächenanzeigeelement (7) und die Leiterplatte aufweist.

Die Anzeigeanordnung (1) ist leicht zu montieren, kompakt und robust, und ermöglicht es, die Lichtquellen entfernt von den Leuchtfeldern anzuordnen.

Fig. 1

## Anzeigeanordnung mit mehreren Lichtquellen

Die Erfindung betrifft eine Anzeigeanordnung, insbesondere für den Sprechhörer eines Autotelefons, mit mehreren Lichtquellen gemäss dem Oberbegriff des Patentanspruchs 1.

Die bekannten Anzeigevorrichtungen dieser Art haben als Lichtquellen Leuchtdioden, Glühlampen oder Glimmlampen mit Anschlussdrähten, wobei die Länge und die Ausrichtung der Anschlussdrähte so gewählt werden muss, dass die Lichtquellen exakt an vorher bestimmten Stellen liegen.

Die Lichtquellen werden mit ihren elektrischen Anschlussdrähten als Komponenten in Leiterplatten (PCB) eingelötet. Die Länge der eingelöteten Komponentenanschlussdrähte richtet sich nach dem Abstand zu den Gehäuseöffnungen, in denen die Lichtquellen sitzen, von der Leiterplatte. Ein hochgenaues Einlöten der Komponeten in Leiterplatten ist praktisch ohne unverhältnismässig hohen Aufwand nicht möglich, so dass die Komponenten mit ihren Anschlussdrähten beim Einsetzen in die Gehäuseöffnungen nachgebogen werden müssen. Dieses genaue Montieren und spätere Einpassen ist zeitaufwendig und fehleranfällig (angebrochene Anschlussdrähte und schadhafte Lötstellen).

Der Erfindung liegt die Aufgabe zugrunde, eine leicht zu montierende, kompakte und robuste Anzeigeanordnung mit mindestens einem Leuchtfeld zu schaffen, die es ermöglicht, die Lichtquellen entfernt von dem oder den Leuchtfeldern anzuordnen.

Die erfindungsgemässe Lösung dieser Aufgabe ist Gegenstand der Patentansprüche.

Sie wird anhand der beiliegenden, lediglich einen beispielsweisen Ausführungsweg darstellenden Zeichnungen erläutert. Es zeigen:

Fig. 1 eine Draufsicht auf einen Ausschnitt einer Abdeckung eines Telefonhörers mit einer erfindungsgemässen Anzeigeanordnung,

Fig. 2 eine Draufsicht auf die Anzeigeanordnung von Fig. 1, in grösserem Massstab,

Fig. 3 eine Untersicht der Anzeigeanordnung von Fig. 1, in grösserem Massstab,

Fig. 4 einen Längsschnitt durch den lichtleitenden Teil der Anzeigeanordnung entlang der Linie IV-IV in Fig. 2,

Fig. 5 einen Querschnitt durch den lichtleitenden Teil der Anzeigeanordnung entlang der Linie V-V in Fig. 2,

Fig. 6 einen Querschnitt durch die Anzeigeanordnung entlang der Linie VI-VI in Fig. 2,

Fig. 7 einen Längsschnitt durch den lichtleitenden Teil einer Variante,

Fig. 8 eine Explosionszeichnung einer Variante.

Fig. 9 eine Draufsicht auf einen Ausschnitt einer Variante einer Abdeckung des Telefonhörers mit eingesetzten Lichtleitelementen ohne Abdeckplatte,

Fig. 10 einen Schnitt durch die Abdeckung von Fig. 9 entlang der Linie X, wobei zur besseren Veranschaulichung nur zwei Lichtleitelemente eingesetzt sind,

Fig. 11 eine Draufsicht auf eines der Lichtleitelemente,

Fig. 12 eine Seitenansicht des in Fig. 11 dargestellten Lichtleitelements in Blickrichtung XII in Fig. 9,

Fig. 13 eine Seitenansicht einer weiteren Variante des Lichtleitelements,

Fig. 14 eine perspektivische Darstellung eines mehrere Lichthohlleiter aufweisenden Lichtleitelements, und

Fig 15 einen Langsschnitt durch eine Anzeigeanordnung mit dem Lichtleitelement von Fig. 14.

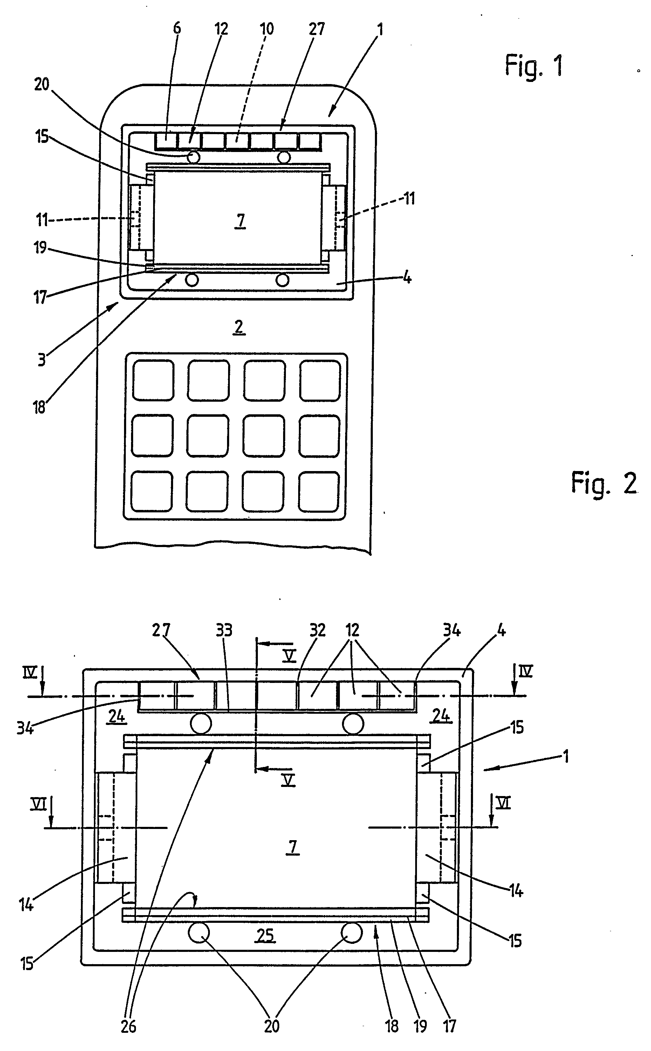

Die in den Fig. 1-6 dargestellte Anzeigeanordnung 1 ist als Ganzes in eine Oeffnung 3 in einer Abdeckung 2 im hörerseitigen Teil des Sprechhörers (Handapparats) eines Autotelefons eingesetzt und dient zur Anzeige und Meldung von Betriebszuständen sowie von Ruf- und Meldebefehlen.

Die Anzeigeanordnung 1 hat eine Abdeckplatte 4, ein Lichtleitelement 5, ein Flächenanzeigeelement (liquid crystal display LCD) 7, eine Leiterplatte 9, sieben Leuchtdioden (lichtemittierende Dioden LED) 10 in SMD-Ausführung (surface mounted device) als Lichtquellen für sieben Leuchtfelder 12 an der Oberseite des Lichtleitelements 5 und zwei Leuchtdioden 11 ebenfalls in SMD-Ausführung als Lichtquellen für eine Hintergrundbeleuchtung des Flächenanzeigeelements 7 mittels eines plattenförmigen Teils 13 des Lichtleitelements 5.

Die Abdeckplatte 4 und das Lichtleitelement 5 sind Spritzgussteile aus glasklarem Kunststoff, vorzugsweise aus Polymethylmethacrylat (Markenbezeichnung: Plexiglas). Das Flächenanzeigeelement 7 liegt auf dem mittleren, plattenförmigen Teil 13 des Lichtleitelements 5 und ist durch vier Positionieransätze 15 des Elements 5 auf dem Teil 13 positioniert. Unter dem Lichtleitelement 5 liegt die Leiterplatte 9, die eine elektrische Ansteuerschaltung 16 für das Flächenanzeigeelement 7 und die Leuchtdioden 10, 11 zur Beleuchtung der Anzeigefelder 12 und zur Hintergrundbeleuchtung für das Flächenanzeigeelement 7 mittels des plattenförmigen Teils 13 trägt. Die Elektroden des Flächenanzeigeelements 7 sind entlang seiner Längsseiten angeordnet und durch zwei Reihen elastischer elektrischer Leiter 17, die in je ein elastisches Kunststoffband 19 eingebettet sind, mit den analogen Elektroden der elektrischen Ansteuerschaltung 16 verbunden. Die beiden elastischen Kunststoffbänder 19 stecken in je einem Schlitz 18 an den Längsseiten des plattenförmigen Teils 13. Die Abdeckplatte 4 überdeckt das Lichtleitelement 5. An ihrer Unterseite hat die Abdeckplatte 4 vier Rasten 20, die durch je vier Löcher 21 in ·der Leiterplatte 9 und je vier Löcher 22 im Beleuchtungselement 5 greifen. Die Rasten 20 halten die Abdeckplatte 4, das Flächenanzeigeelement 7 und die Leiterplatte 9 zusammen, wobei die Elastizität des elastischen Kunststoffbandes 19 für ausreichenden Gegendruck sorgt. Die Abdeckplatte 4 liegt mit ihren Rändern auf der Oberseite eines Absatzes 23 der Oeffnung 3 des Sprechhörers 2 auf, wobei (nicht dargestellte) Dichtungsmittel dafür sorgen, dass das Gehäuseinnere staub- und spritzwassergeschützt ist. Gegen die Unterseite des Absatzes 23 sind an der in Fig. 2 linken sowie rechten oberen Ecke und dem unteren Längsrand der Oeffnung 3 Stützeckteile 24 und ein Stützrand 25 des Lichtleitelements 5 gedrückt. Die Stützeckteile 24 und der Stützrand 25 liegen ebenfalls auf der Leiterplatte 9 auf. An die in Fig. 2 linken und rechten Stirnseiten des plattenförmigen Teils 13 schliessen bogenförmige Teile 14 des Lichtleitelements 5 an, die mit den beiden Stützeckteilen 24 und dem Stützrand 25 verbunden sind, damit das ganze Lichtleitelement 5 ausreichende mechanische Stabilität hat.

Von der Vielzahl elektrischer Kontakte der elektrischen Ansteuerschaltung 16 werden ebensoviele Elektroden des Flächenanzeigeelements 7 über die noch grössere Anzahl elastischer, elektrischer Leiter 17, die innerhalb des elastischen und isolierenden Kunststoffbands 19 eingebettet sind, angesteuert. Der gegenseitige Abstand der elastischen, elektrischen Leiter 17 ist so klein gewählt, dass mindestens zwei Leiter 17 auf einen Zwischenraum der Elektroden entfallen.

Die Lage der Elektroden des Flächenanzeigeelements 7 in Bezug auf die elektrischen Kontakte der Ansteuerschaltung 16 ist durch die vier Positionierstifte 15 und die Begrenzungen des Flächenanzeigeelements 7 gegeben. Das elastische Kunststoffband 19 wird durch das Flächenanzeigeelement 7 und die Leiterplatte 9 im montierten Zustand durch die Abdeckplatte 4 derart zusammengepresst, dass ein ausreichender Kontaktanpressdruck für eine einwandfreie elektrische Uebertragung gegeben ist.

Das Lichtleitelement 5 ist an der Oberseite rahmenförmig. Die beiden Längsseiten des Rahmens bilden die Oberseiten von zwei leistenförmigen Teilen 25, 27 des Lichtleitelements 5, die auf der Leiterplatte 9 stehen. Die beiden leistenförmigen Teile 25, 27 sind über die beiden bogenförmigen Teile 13 miteinander verbunden. Die sieben Leuchtfelder 12 sind an der Oberseite des leistenförmigen Teils 27 gebildet, der auf seiner Unterseite sieben voneinander distanzierte Aussparungen hat, in denen die Leuchtdioden 10 angeordnet sind. Die auf der Leiterplatte 9 stehenden Stege zwischen den Aussparungen sind mit 28 bezeichnet. Die zwischen den Aussparungen und den Leuchtfeldern liegenden Teile des Elements 5 bilden lichtleitende Teile 6 für das Licht der betreffenden Leuchtdiode 10. Die über den Leuchtdioden 10 liegenden Unterseiten der lichtleitenden Teile 6 sind mit 29 bezeichnet. Die Oberflächenqualität der Unterseiten 29 entspricht minimalen optischen Anforderungen, d. h. sie müssen glatt sein. An die Gleichmässigkeit der Oberflächen werden nur geringe Anforderungen gestellt; Abweichungen, Kratzer und Schlieren dürfen mit blossem Auge noch erkennbar sein.

In jeder Unterseite 29 befindet sich angrenzend an die beiden Stege 28 je ein senkrecht zur Leistenlängsrichtung verlaufender, bogenförmiger Schlitz 30. Die Leuchtdioden 10 befinden sich vertikal je unter der Mitte der von den Schlitzen 30 begrenzten, lichtleitenden Teile des Elements 5. Die Abstände der Schlitze 30 sind so bemessen, dass die Strahlung, die jede Leuchtdiode 10 unter dem grössten Raumwinkel verlässt gerade noch innerhalb des von den Schlitzen 30 begrenzten lichtleitenden Teils auf dessen Unterseite 29 trifft. An der Oberseite 31 sind die Leuchtfelder 12 durch parallel zu den Schlitzen 30 verlaufende Schlitze 32 im leistenförmigen Teil 27 voneinander getrennt. Ein weiterer in Leistenlängsrichtung verlaufender Schlitz 33 an der Oberseite des Elements 5 trennt die Leuchtfelder 12 vom übrigen Teil der Anzeigeanordnung 1. Die Tiefe der Schlitze 32, 33 ist so gross, dass an der Unterseite 29 gebeugtes Licht nicht im benachbarten Leuchtfeld 12 erscheint, sondern wieder in den lichtleitenden Teil 6 des Leuchtfeldes 12 der betreffenden Leuchtdiode 10 zurückreflektiert wird. An den Stirnseiten des leistenförmigen Teils 27 ist ebenfalls je ein zur Leistenlängsrichtung senkrechter Schlitz 34 vorgesehen, der das Eindringen des Lichts in den restlichen Teil des Elements 5 verhindert.

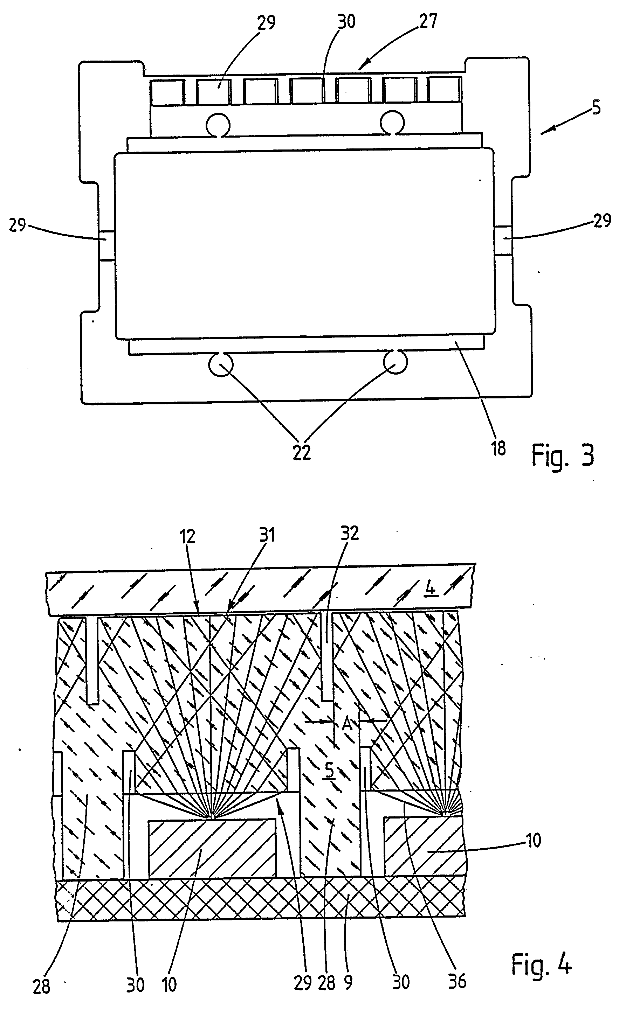

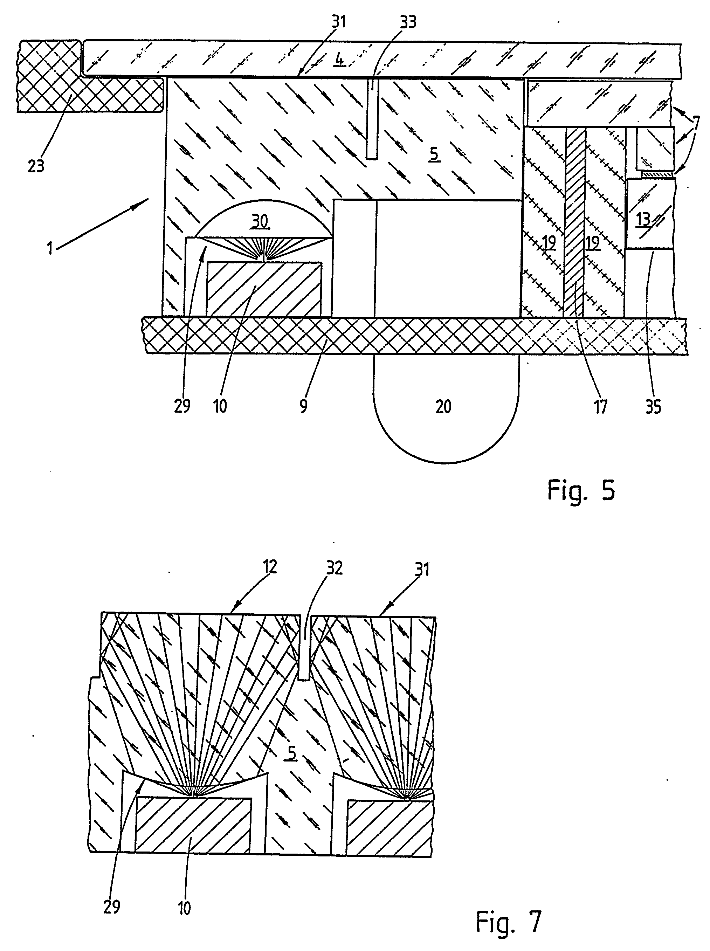

Die von der Leuchtdiode 10 unter einem Raumwinkel von 70° emittierte Strahlung 36 wird an der Unterseite 29 des lichtleitenden Teils 6 des leistenförmigen Teils 27 gebrochen. Die gebrochenen Strahlen erreichen in dem Beispiel von Fig. 3 bis zu Raumwinkeln von 40° direkt das Leuchtfeld 12. Ab ungefähr 40° bis knapp 60° werden die Strahlen an der Unterseite 29 gebrochen und dann am oberen Schlitz 32 totalreflektiert, da der Einfallswinkel dieser Strahlen auf die Wand des Schlitzes 32 grösser als 42° ist. Infolge der Totalreflexion werden diese Strahlen ebenfalls durch den lichtleitenden Teil 6 zum Leuchtfeld 12 geleitet. Strahlen von 60° bis 70° werden an der Wand des unteren Schlitzes 30 reflektiert. Die Schlitze 30, 32, 33, 34 werden benötigt um das Licht zu je einem Leuchtfeld 12 zu leiten und um es von den benachbarten Anzeigefeldern 12 fernzuhalten. Die Tiefe des Schlitzes 30 nimmt, wie in Fig. 5 gezeigt, von der Schlitzmitte zu den Schlitzenden hin gegen null ab, wobei der untere Schlitzrand aus spritztechnischen Gründen kreisbogenförmig ausgeführt ist. Die Schnittpunkte, in denen die unter dem maximalen Raumwinkel abgestrahlte Strahlung 36 die Unterseite 29 schneidet, liegt auf einem Kreis, der den unteren Schlitzrand in der Längsmitte berührt. Der Kreis ist von den Schlitzenden distanziert, weshalb die Schlitztiefe dort für die Lichtleitung ohne Belang ist.

Die unteren und oberen Schlitze 30, 32 sind gegeneinander um die Strecke A (Fig. 4) versetzt um die mechanische Stabilität des leistenförmigen Teils 27 zu erhöhen.

Der Abstand der Leuchtdioden 10 von der Unterseite 29 der als Lichtleiter wirkenden des leistenförmigen Teils 27 wird durch den Raumwinkel, in dem die Leuchtdiode 10 Strahlung emittiert, den Brechungsindex des lichtleitenden Kunststoffes, die Grösse des Leuchtfeldes 12 und die Tiefe der totalreflektierenden Schlitze 30, 32 bestimmt.

Um ein Verschmutzen der oberen Schlitze 32, 33, 34 zu verhindern, ist die Oberfläche der Anzeigeanordnung 1 mit der Abdeckplatte 4 abgedeckt. Die Abdeckplatte 4 ist über dem Flächenanzeigeelement 7 und über den Anzeigefeldern 12 transparent und trägt in dem Raum zwischen den Leuchtfeldern 12 und dem Flächenanzeigeelement 7 die Leuchtfelder 12 kennzeichnende Zeichen.

Die Abdeckplatte 4 hat somit mit ihren Rasten 20 eine Mehrfachfunktion: Sie hält die Leiterplatte 9, das Lichtleitelement 5 und das Flächenanzeigeelement 7 zusammen, deckt die Schlitze 32, 33, 34 gegen eindringen den Schmutz ab, ermöglicht eine staub- und spritzwasserdichte Anordnung der elektrischen Schaltung im Sprechhörer 2 und präsentiert dem Telefonbenützer eine klare und ansprechende Anzeigeanordnung 1.

Der plattenförmige und die bogenförmigen Teile 13 und 14 des Lichtleitelements 5 sind als ein Lichtleiter ausgebildet, um das Flächenanzeigeelement 7 von seiner Unterseite her zu beleuchten. Die Beleuchtung erfolgt durch die beiden Leuchtdioden 11 auf der Leiterplatte 9, die unter den Enden der Teile 14 angeordnet sind. Das von jeder der beiden Leuchtdioden 11 emittierte Licht wird durch Totalreflexion im Lichtleiter 13, 14 geführt. Der Verlauf der von den Dioden 11 ausgehenden Strahlung ist für verschiedene Raumwinkel in der Zeichnung dargestellt, wobei die ausgezogene Linie 40 die Strahlung unter dem Raumwinkel 0°, die strichpunktierte Linie 41 unter 25°, die gestrichelte Linie 42 unter 50° und die punktierte Linie 43 unter 70° darstellt. Die unter dem grössten Raumwinkel (70°) austretende Strahlung 43 trifft die Seitenflächen des Lichtleiters 13, 14 erst in Höhe des Spaltes für das elastische Kunststoffband 19. Die Oberfläche dieses Spaltes sorgt ebenfalls für Totalreflexion der Strahlung. Eine gleichmässige Hintergrundbeleuchtung für das Flächenanzeigeelement 7 erzeugt ein lichtstreuender Belag 35 an der Unterseite 28 des plattenförmigen Teils 13.

Die oben beschriebene Anzeigeanordnung 1 hat gegenüber den bekannten Anzeigeanordnungen dieser Art mit Lichtquellen, die frei durch Oeffnungen eines Gehäuses ragen oder mit Kappen bedeckte Leuchtdioden, Glühlampen oder Glimmlampen besitzen, den Vorteil, dass keine Spalte, die verschmutzen könnten, mehr vorhanden sind. Elektrische Ansteuerschaltungen 16 können einfach und raumsparend unter der Anzeigeanordnung 1 angebracht werden. Alle Lichtquellen (10, 11) sind als SMD ausgebildet und lassen sich dadurch äusserst raumsparend in die elektrische Ansteuer-Schaltung (16) integrieren. Eine Justage der Leuchtdioden (10, 11) bei der Endmontage ist nicht mehr erforderlich. Hierdurch wird bei reduzierter Montagezeit zusätzlich eine Fehlerquelle aufgrund gebrochener bzw. angebrochener Anschlussdrähte sowie schadhafter Lötstellen eliminiert. Durch die in der Oeffnung 3 im Sprechhörer 2 liegende Abdeckplatte 4 wird die elektrische Ansteuerschaltung 16 und auch die Anzeigeanordnung 1 vor Umwelteinflüssen geschützt.

Anstelle der aufgezeigten Anordnung der Leuchtfelder 12 können auch andere räumliche Anordnungen gewählt werden; auch kann die dargestellte rechteckige Felderform z. B. in runde Felder abgewandelt werden.

Anstelle des lichtstreuenden Belags 35 können im plattenförmigen Teil 13 Streuzentren eingelagert sein. Ein lichtstreuender Belag oder Streuzentren können auch im Bereich der Leuchtfelder 12 vorgesehen sein oder es können auch Streuzentren in das ganze Element 5 eingelagert sein.

Die Abdeckplatte 4 kann voll transparent sein, oder teilweise undurchsichtige Beschichtungen bzw. eine farbige Beschriftung mit Firmenlogos und/oder sonstige Hinweise tragen. Die Beschriftung kann auch direkt über den Anzeigefeldern 12 erfolgen. Auch können farbige Felder auf der Abdeckplatte 4 angebracht sein, so dass die Anzeigefelder 12 farbig erscheinen.

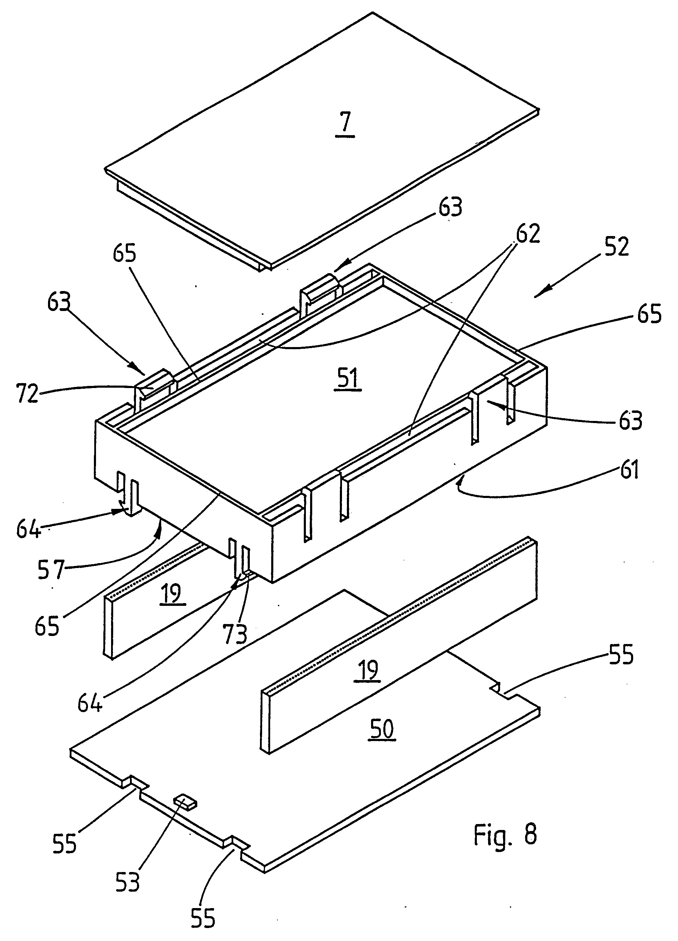

Bei der in Fig. 7 dargestellten Variante sind die Unterseiten 29 statt eben als konvexe Linsenflächen ausgebildet. Die Leuchtdioden 29 sind näher an der konvexen Unterseite 29 angeordnet als bei der Ausführungsform von Fig. 1-6. Die Schlitze 30 entfallen bei dieser Variante.

Anstelle der konvexen Linsenfläche kann auch eine positive Fresnellinsenfläche verwendet werden. Die Fresnellinsenfläche lässt sich durch Spritzgiessen einfach herstellen und ermöglicht einen grösseren Abstand von der Leuchtdiode 10.

Sollen mehrere Leuchtfelder 12 von einer Leuchtdiode 10 aus beleuchtet werden, so kann dies mittels schräg gestellter lichtbrechender Unterseite 29 des Elements 5 oder versetzter Linsenfläche erreicht werden. Auf diese Weise kann auch ein Leuchtfeld 12 durch mehrere Lichtquellen 10 beleuchtet werden. Die spezifische Lichtausstrahlung des Leuchtfeldes 12 kann dann in einem grossen Bereich variiert werden.

Anstelle der Schlitze 30, 32, 33, 34 kann in den glasklaren Kunststoff auch refektierendes Material, vorzugsweise Aluminiumfolie eingegossen werden, wobei die Strahlung anstatt durch Totalreflexion durch Reflexion an der Metalloberfläche umgelenkt wird.

Zur Vermeidung des Lichtübertritts zwischen benachbarten Leuchtdioden 10 zugeordneten, lichtleitenden Teilen 6 könnte anstelle der Schlitze 30, 32, 33 und/oder 34 auch lichtabsorbierendes Material vorgesehen sein, wobei jedoch Lichtverluste auftreten.

Anstelle der Schlitze 30, 32, 33, 34 kann auch das lichtleitende Kunststoffmaterial von einem Kunststoff mit niedrigerem Brechungsindex vollständig umgeben sein. Die Lichtreflexion erfolgt dann an der Grenzschicht vom hochbrechenden zum niedrigbrechenden Material. Eine vollständige Ummantelung ist nicht notwendig; es sind auch Anordnungen analog der Schlitze 30, 32, 33, 34 möglich, wobei anstelle der Schlitze 30, 32, 33, 34 das Material mit dem niedrigen Brechungsindex vorzusehen ist. Abstände, Neigung der gebrochenen Strahlen und Winkel der Totalreflexion richten sich dann nach den Brechungsindices des hoch und niedrig brechenden Materials.

Anstelle einer glatten Oberfläche des Leuchtfeldes 12 kann auch eine matte Oberfläche vorgesehen sein. Auch können Masken mit teilweise transparenten und absorbierenden bzw. reflektierenden Teilen vorgesehen sein.

Die elektrischen Leiter 17 von der Ansteuerschaltung 16 zu den Elektroden des Flächenanzeigeelements 7 können auch direkt, vorzugsweise als Kohlefaser haltige Polyamidfüllung, beim Spritzen mit einer Zweifarben-Kunststoff-Spritzmaschine in die Kunststoffmasse des Lichtleitelements integriert werden.

Die Leuchtfelder 12, die Verkapselung der Leuchtdioden 10, 11 und die lichtleitenden Teile der Anzeigeanordnung 1 können eingefärbt werden. Oder es können farbige Folien auf den Leuchtfeldern 12, den Flächen 29 oder der Abdeckplatte 4 angebracht werden. Auch Leuchtdioden 10, 11 mit unterschiedlicher Wellenlänge können verwendet werden.

Bei der in Fig. 8 dargestellten Variante hat das Lichtleitelement 52 an seiner Oberseite zur Aufnahme des Flächenanzeigeelements 7 einen von einem rahmenförmigen Teil 65 umgebenen plattenförmigen Innenteil 51.

Der rahmenförmige Teil 65 hat in seinen Längs- und Stirnseiten je zwei einander gegenüberliegende federnde Teile 63 und 64. Die Teile 63 bzw. 64 sind seitlich durch je zwei Einstiche von den Längs- und Stirnseiten des rahmenförmigen Teils 65 getrennt, und stehen nur an ihrem Fusspunkt mit ihnen in Verbindung. Die Einstiche der Teile 63 sind in Fig. 8 nach oben und die der Teile 64 nach unten offen. Die Teile 63 und 64 besitzen an ihrem dem Fusspunkt entgegengesetzten Ende Klinken 72 und 73, die in Richtung auf den plattenförmigen Innenteil 51 bzw. zu den Eckpunkten des rahmenförmigen Teils 64 zeigen. Die Klinken 72 der federnden Teile 63 greifen über das Flächenanzeigeelement 7, und die Klinken 73 der federnden Teile 64 in Aussparungen 55 der Leiterplatte 50 und fixieren beide am Lichtleitelement 52. Diese Schnapphalterung erhält eine federnde Gegenkraft von zwei elastischen Leiterbändern 19, die in je einem Schlitz 62 jeder Längsseite des rahmenförmigen Teils 65 stecken. Auch hier bilden, wie schon oben beschrieben, die elastischen Leiterbänder 19 die elektrische Verbindung zwischen der Ansteuerschaltung auf der Leiterplatte 50 und dem Flächenanzeigeelement 7.

Der plattenförmige Innenteil 51 ist vollständig vom rahmenförmigen Teil 65 umgeben. Das Flächenanzeigeelement 7 ist, wie in Fig. 8 gezeigt, ein Sandwich aus zwei Glasplatten gleicher Länge, wobei die Breite der unteren Glasplatte kleiner ist als die der oberen. Die Höhe des rahmenförmigen Teils 65 über dem plattenförmigen Innenteil 51 ist um eine Toleranz grösser als die Dicke der unteren Glasplatte. Als Variante kann der Innenrand des Schlitzes 62 entlang der Längsseite des rahmenförmigen Teils 65 weggelassen werden, da das Flächenanzeigeelement 7 auf den elastischen Leitern 17 aufliegt und durch die Stirnseite des rahmenförmigen Teils 65 und durch die Innenflächen der ersten federnden Teile 63 positioniert wird. Die Höhe des rahmenförmigen Teils 65 über dem plattenförmigen Innenteil 51 kann dann um eine Toleranz kleiner als die gesamte Höhe des Flächenanzeigeelements 7 sein.

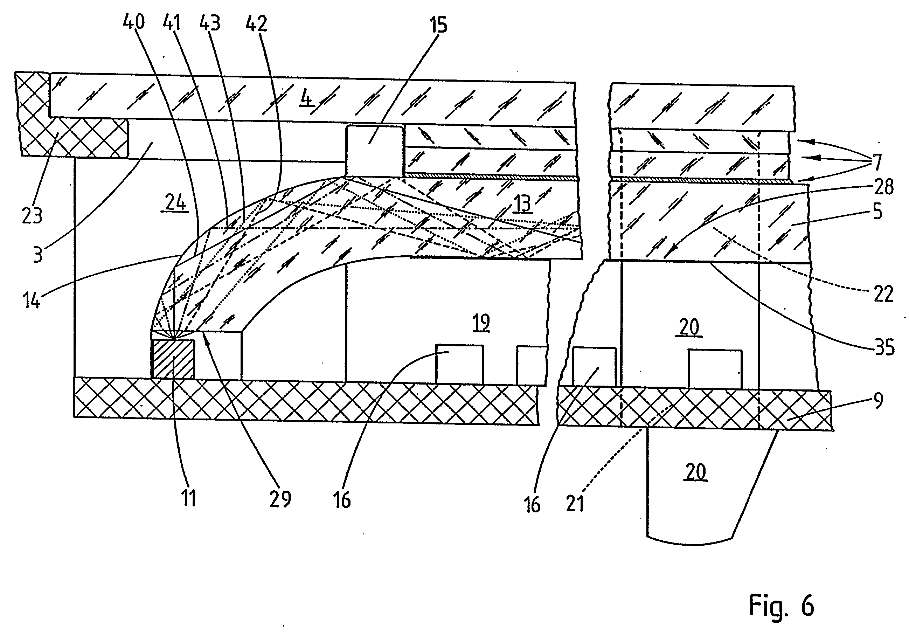

Der plattenförmige Innnenteil 51 ist an seiner dem Flächenanzeigeelement 7 abgewandten Unterseite 61 mit einem lichtstreuenden Belag (nicht dargestellt) analog Fig. 6 versehen. Zwei Leuchtdioden 53, die über Lichtleitung, wie analog in Fig. 6 dargestellt, eine Hintergrundbeleuchtung im plattenförmigen Innenteil 51 für das Flächenanzeigeelement 7 erzeugen, befinden sich unter der Mitte der Stirnfläche des Lichtleitelements 52.

Anstelle der Dioden (10, 11; 53) als SMD können auch Dioden mit anderen Gehäuseformen verwendet werden. Je nach der verwendeten Gehäuseform sind geringfügige konstruktive Anpassungen am Lichtleitelement 5 vorzunehmen.

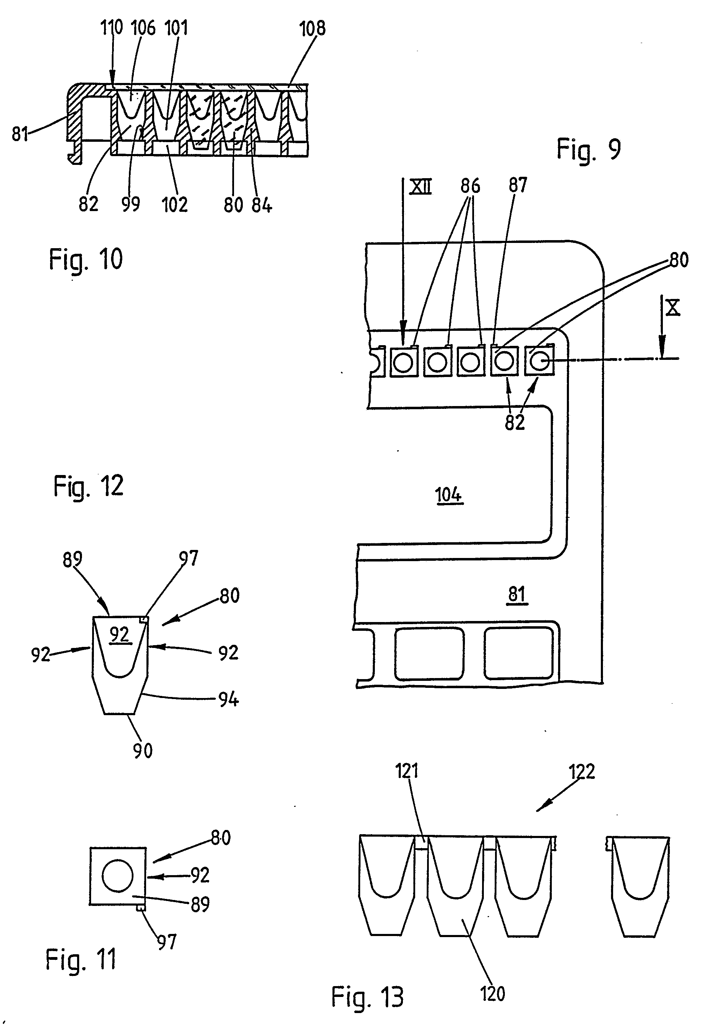

Bei der in Fig. 9-12 dargestellten Variante sind anstelle des Lichtleitelements 5 mit den lichtleitenden Teilen 6 mehrere einzelne lichtleitende Elemente 80 vorgesehen. Die Abdeckung 81 besteht aus lichtabsorbierendem Material und hat, wie in den Figuren 9 und 10 dargestellt, mehrere trichterartige Kammern 82, in welche die Elemente 80 eingesetzt sind. Die Kammern 82 sind in einer Reihe angeordnet und mit einstückig aus dem gleichen lichtabsorbierenden Material an der Abdeckung 81 gebildeten Trennwänden 84 umgeben. Die Kammern 82 haben in ihrer in Fig. 9 oberen linken Ecke eine Aussparung 86, bzw. in ihrer rechten oberen Ecke eine Aussparung 87. In ihrem in Fig. 10 unteren Bereich hat jede Kammer 82 einen nach innen vorstehenden Wulst 99, der die Kammer 82 in einen oberen und einen unteren Kammerteil 101 und 102 trennt. Im oberen Kammerteil 101 ist das lichtleitende Element 80 gehalten, der untere Teil 102 schattet die Strahlung der Leuchtdiode 10 durch die Trennwände 84 gegen die Strahlung benachbarter Leuchtdioden 10 ab.

Unterhalb der in Fig. 9 in Reihe angeordneten Elemente 80 befindet sich in der Abdeckung 81 eine Oeffnung 104, in der das Flächenanzeigeelement 7 angeordnet ist. Die Trennwände 84 im oberen Kammerteil 101 zwischen den Elementen 80 und an der der Oeffnung 104 abgewandten Seite sind annähernd gleich dick, während die der Oeffnung 104 zugewandte Trennwand 84 derart verdünnt ist, dass eine der unten beschriebenen Seitenflächen 92 je eines der Elemente 80 freiliegend durch eine nach unten zeigende spitzbogenförmige Oeffnung 106 in der Trennwand 84 zur Oeffnung 104 zeigt.

Die lichtleitenden Elemente 80 bestehen aus glasklarem Kunststoff und sind, wie in Fig. 12 zu sehen, als Pyramidenstumpf mit einer quadratischen, polierten oberen Abschlussfläche 89 und einer kreisförmigen unteren zur Fläche 89 parallelen, polierten Grundfläche 90 ausgebildet. Zur oberen Fläche 89 senkrecht stehende Seitenflächen 92 gehen in eine kegelstumpfförmige Mantelfläche 94 über. Die Trennwände 84 sind so ausgebildet, dass die Elemente 80 mit einer Spielpassung in den Kammerteilen 101 liegen. Die Seitenflächen 92 und die Mantelfläche 94 haben eine unpolierte, d. h. leicht angerauhte Oberfläche. An der linken bzw. rechten oberen Kante der Grundläche 89 befindet sich ein Ansatz 97. Die Abmessungen des Ansatzes 97 sind derart gewählt, dass dieser in die Aussparung 86 bzw. 87 passt. Hierdurch ist eine Zuordnung jedes der lichtleitenden Elemente 80 zur betreffenden Kammer 82 möglich.

Im montierten Zustand liegen die Grundflächen 90 in einem kleinen Abstand über den Leuchtdioden 10. Durch die angerauhten Seitenflächen 92 und die Mantelfäche 94 wird von der Leuchtdiode 10 annähernd für Winkel über 30° in das Element 80 eingekoppeltes Licht gestreut. Dieses Licht trägt dazu bei, dass auf der als Leuchtfläche dienenden Fläche 89 des Elements 80 eine gleichmässige Ausleuchtung erzielt wird. Durch die Lichtstreuung der in der spitzbogenförmigen Oeffnung 106 liegenden Seitenfläche 92 ist eine Beleuchtung des in der Oeffnung 104 liegenden Flächenanzeigeelements 7 möglich.

Das in der Oeffnung 104 liegende Flächenanzeigeelement 7, sowie die in den Kammern 82 liegenden Elemente 80 sind durch eine geringfügig diffus streuende Abdeckscheibe 108, die vertieft in einem Rahmen 110 der Abdeckung 81 liegt, spritzwasser- und staubdicht abgedeckt. Die Abdeckscheibe 108 wird durch nicht dargestellte Klebestreifen an ihren Rändern im Rahmen 110 gehalten.

Der Rahmen 110 kann eine nicht dargestellte Bedruckung sowie eine lichtundurchlässige Beschichtung über einem oder einigen Elementen 80 tragen, welche nur zur Beleuchtung des Flächenanzeigeelementes 7 verwendet werden.

Bei der in Fig. 13 dargestellten Variante sind den Elementen 80 entsprechende, lichtleitende Elemente 120 in Reihe, gleichsam "verkettet", durch an ihren Seitenflächen angeformte Stege 121 miteinander zu einem einstückigen Lichtleitelement 122 vereinigt, das als Ganzes in eine der Abdeckung 4 bzw. 81 entsprechende Abdeckung einsetzbar und gewünschtenfalls mittels der Abdeckscheibe 108 abdeckbar ist. Die Stege 121 können auch in einem Abstand von der oberen Fläche der Elemente 120 angeordnet sein, so dass die Elemente 120 die Stege 121 nicht nur nach unten sondern auch etwas nach oben überragen. Die Stege 121 können ferner Teile einer Platte sein, die in eine der Oeffnung 3 entsprechende Oeffnung der Abdeckung einsetzbar ist und sich über das Flächenanzeigeelement 7 hinweg erstreckt.

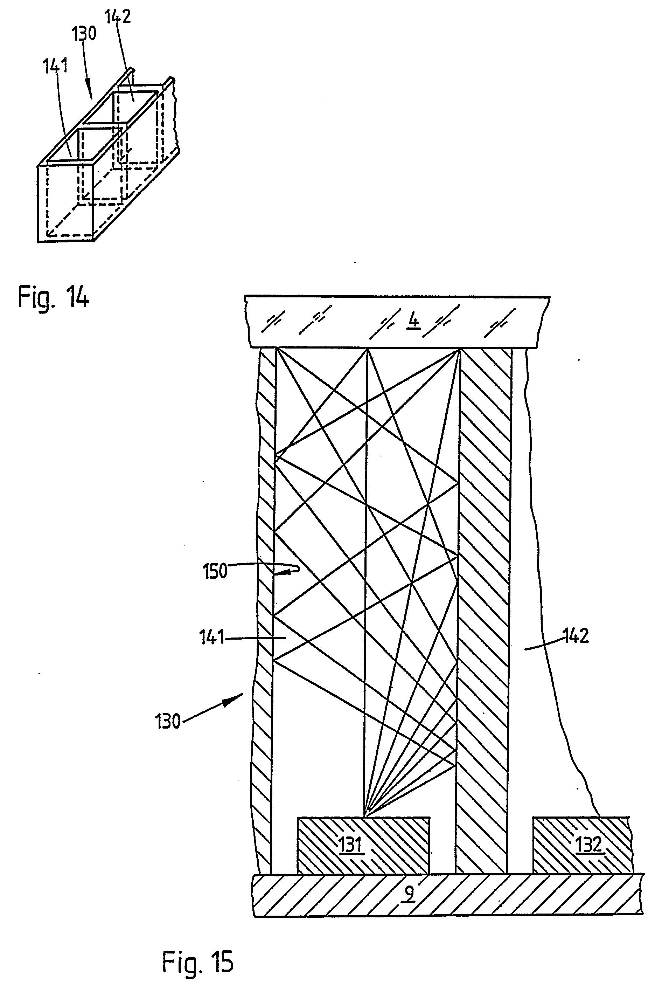

Bei der in Fig. 14 und 15 dargestellten Variante hat das Lichtleitelement 130 für jede Leuchtdiode 131, 132 einen sich von der Leiterplatte 9 zur Abdeckplatte 4 erstreckenden Lichthohlleiter 141, 142. Das Lichtleitelement 130 ist als Spritzgussteil mit einer wabenartigen, die reflektierenden Wände 150 der Lichthohlleiter 141, 142 bildenden Struktur ausgeführt, z. B. als Aluminiumspritzgussteil oder als innen mit einer lichtreflektierenden Schicht beschichteter Kunststoffteil. Die Wände 150 der Lichthohlleiter können diffus reflektierend sein, um eine gleichmässige Ausleuchtung des betreffenden Leuchtfelds zu gewährleisten.

**Ansprüche**

1. Anzeigeanordnung, insbesondere für den Sprechhörer eines Autotelefons, mit mehreren Lichtquellen (10, 11; 131, 132) gekennzeichnet durch mindestens ein Lichtleitelement (5; 52; 80; 122, 130), welches das Licht der Lichtquellen (10, 11; 53; 131, 132) zu mindestens einem Leuchtfeld (12, 13; 51) leitet.

2. Anzeigeanordung nach Anspruch 1, dadurch gekennzeichnet, dass die Leuchtfelder (12, 13; 51) an wenigstens einem Teil der Oberfläche des bzw. der Lichtleitelemente (5; 52; 80; 122) gebildet sind, und dieses bzw. diese für jede Lichtquelle (10, 11; 53) einen lichtleitenden Teil (6; 80; 120) besitzt, der das Licht der Lichtquelle (10, 11; 53) zu einem der Leuchtfelder (12, 13; 51) leitet.

3. Anzeigeanordnung nach Anspruch 1 oder 2, dadurch gekennzeichnet, dass das Lichtleitelement (5; 52; 122; 130) einstückig mit mehreren lichtleitenden Teilen (6; 120; 141, 142) gebildet ist, deren jeder das Licht einer der Lichtquellen (10, 11; 53; 131, 132) zu einem der Leuchtfelder (12, 13; 51) leitet.

4. Anzeigeanordnung nach Anspruch 3, dadurch gekennzeichnet, dass die je einer Lichtquelle (10, 11; 53) zugeordneten lichtleitenden Teile (6; 120) des Lichtleitelements (5; 52; 122) wenigstens teilweise durch Luftspalte (26, 32, 33, 34) voneinander und ggf. von weiteren Teilen des Lichtleitelements getrennt sind, damit kein Uebertritt des Lichts von einem lichtleitenden Teil (6; 120) in benachbarte Teile des Lichtleitelements (5; 52; 122) erfolgt.

5. Anzeigeanordnung nach einem der Ansprüche 1 bis 4, dadurch gekennzeichnet, dass die Lichtleitelemente (80) bzw. die je einer Lichtquelle (10, 11; 53) zugeordneten lichtleitenden Teile (6; 80; 120) des Lichtleitelements (5; 52; 122) so ausgebildet und angeordnet sind, dass die Lichtstrahlen jeder Lichtquelle (10, 11; 53) nahezu vollständig in Richtung auf eines der Leuchtfelder (12, 13; 51) gebrochen werden.

6. Anzeigeanordnung nach einem der Ansprüche 1 bis 5, dadurch gekennzeichnet, dass mindestens die lichtleitenden Teile (6; 80; 120) des bzw. der Lichtleitelemente (5; 52; 80; 122) aus glasklarem Kunststoff bestehen.

7. Anzeigeanordnung nach einem der Ansprüche 1 bis 6, mit einem Flächenanzeigeelement (7), dadurch gekennzeichnet, dass das Lichtleitelement (5; 52) einen rahmenförmigen Teil (65) hat, der das Flächenanzeigeelement (7) umschliesst.

8. Anzeigeanordnung nach einem der Ansprüche 1 bis 7, dadurch gekennzeichnet, dass das bzw. die Lichtleitelemente (5) durch eine Maske mit transparenten Feldern und nicht transparenten Feldbegrenzungen abgedeckt ist.

9. Anzeigeanordnung nach Anspruch 7, dadurch gekennzeichnet, dass der rahmenförmige Teil (65) des Lichtleitelements (5) eine Rahmenleiste (27) hat, an deren Oberseite wenigstens ein Teil der Leuchtfelder (12) liegt.

10. Anzeigeanordnung nach einem der Ansprüche 1 bis 9, mit einem Flächenanzeigeelement (7), dadurch gekennzeichnet, dass das Lichtleitelement (5; 52) einen plattenförmigen Lichtleitteil (13; 51) hat, auf dem das Flächenanzeigeelement (7) zwecks Hintergrundbeleuchtung aufliegt.

Fig. 1

Fig. 2

Fig. 3

Fig. 4

Fig. 5

Fig. 7

Fig. 6

EP 0 310 889 A2

Fig. 8

Fig. 10

Fig. 9

Fig. 12

Fig. 11

Fig. 13

Fig. 14

Fig. 15